# EUROPEAN PATENT SPECIFICATION

(11) **EP 1 914 818 B1**
(45) Date of publication and mention of the grant of the patent: **24.07.2013**
(21) Application number: 07118067.3
(22) Date of filing: 08.10.2007
(51) Int. Cl.: H01M 10/052, H01M 10/0566, H01M 2/06, H01M 2/10, H01M 2/02, H01M 2/04

(54) **Highly compact electrochemical cell**
Hochkompakte elektrochemische Zelle
Cellule électrochimique très compacte

(30) Priority: 06.10.2006 US 828398 P
(43) Date of publication of application: 23.04.2008
(73) Proprietor: Greatbatch Ltd., Clarence, NY 14031 (US)
(72) Inventor: Freitag, Gary, East Aurora, NY 14052 (US); Frustaci, Dominick, Williamsville, NY 14221 (US)
(74) Representative: Duckett, Anthony Joseph

(56) References cited:
- US-A- 3 971 673
- US-A- 5 658 688

## Description

### BACKGROUND OF THE INVENTION

### 1. Field of the Invention

The present invention relates generally to electrochemical cells. More particularly, the present invention relates in one embodiment to a highly miniaturized electrochemical cell suitable for integration into an implantable or exploratory medical device. The cell is sufficiently small to be suitable for delivery as part of the medical device through the vasculature of a human.

### 2. Description of Related Art

Recent advances in electrochemical cell technology have resulted in cells that have high discharge rate capability and high energy density. These cells are sufficiently compact in size to render them suitable for use in implantable medical devices such as cardiac pacemakers and defibrillators.

U.S. Patent Application Pub. No. 2007/0122697 to Wutz et al., which is assigned to the assignee of the present invention, describes one such exemplary electrochemical cell comprising a substantially rectangular casing, and a mating terminal connector adapted to be connected to the ferrule and the conductive terminal pin of the cell. The terminal connector is provided for easily and quickly connecting the cell to a circuit board of the kind found in an implantable medical device, such as a cardiac pacemaker, defibrillator, neuro-stimulator, or drug pump.

Although the cell of Wutz et al. is suitable for use with many implantable medical devices, continuing medical advances are driving a need for even smaller cells that may be used in more compact implantable devices or in exploratory medical devices that may be deployed into the human vasculature, digestive tract, lungs, or other tissues. Cells such as that of Wutz et al. are too large to be used in these applications.

What is needed, therefore, is an electrochemical cell that is further miniaturized, and is readily connectable to a correspondingly miniaturized medical device. In order to produce such a compact cell, new cell design concepts are needed that eliminate or combine components to the greatest extent possible. New component and cell manufacturing processes are also needed to produce compact cells.

US 3,971,673 describes an electrochemical cell comprising a fluid-tight casing comprising a metal can having a closed bottom and a lateral wall and at least one current output terminal insulated from the can. The casing further comprises a metallic sleeve surrounding the lateral wall of the can. The sleeve is sealed at its first end to the can and at its second end by a glass seal through which the current output crosses in a fluid-tight manner. This cell construction is said to be useful for making electrochemical cells having small dimensions, particularly lithium cells.

US 5,658,688 describes an active primary battery containing a lithium anode; an aprotic organic electrolyte; a separator; and a cathode made of silver (II) oxide, mercuric oxide, or a mixture of silver (II) oxide and mercuric oxide.

### SUMMARY OF THE INVENTION

The present invention provides an electrochemical cell comprising:
a) a casing comprising a proximal opening, a distal opening, and a sidewall surrounding an enclosed volume;
b) a glass-to-metal seal disposed in the proximal opening and within the enclosed volume of the casing;
c) a terminal pin extending from outside the casing through the proximal opening and through the glass-to-metal seal into the enclosed volume of the casing;
d) an electrically non-conductive insulator disposed along a first portion of the casing sidewall;
e) a first electrode comprising first electrode active material contained within the insulator and in electrical contact with the terminal pin;
f) a separator disc comprising a material that permits electrolyte flow between and to opposed first and second major faces spaced apart from each other by a disc thickness providing a disc edge that is contiguous with a second portion of the casing sidewall and wherein the first major disc face is in contact with the first electrode contained within the insulator;
g) a second, counter electrode comprising second electrode active material in contact with the separator disc and with a third portion of the casing sidewall;
h) a lid sealed to the distal opening of the casing, wherein the lid comprises a substantially planar inner face contacting the second electrode active material and supporting a protrusion that extends beyond the planar inner lid face into the second electrode active material; and
i) an electrolyte activating the first and second electrodes;
wherein either the first electrode is a cathode and the second, counter electrode is an anode, or the first electrode is an anode and the second, counter electrode is a cathode.

In one embodiment, the first electrode is a cathode and the second, counter electrode is an anode.

The casing may have a cylindrical shape, a rectangular shape, or a prismatic shape. The casing sidewall may include a narrowed region that is contiguous with the glass-to-metal seal. The insulator is formed as a bag having a sidewall and a bottom through which the proximal end of the terminal pin protrudes. An elastomeric material joins the insulator bottom to the glass-to-metal seal. The insulator further includes an outer edge in contact with a separator disc that closes the insulator bag opposite its bottom. The cathode active material is preferably silver vanadium oxide provided in a powdered form.

The cell lid, which closes the distal casing opening opposite the glass-to-metal seal, includes a protrusion that is in an interference contact with the anode. The lid protrusion extends from the base of the lid and is embedded in the anode active material. That way, the lid applies a compressive force against the anode, the separator disc, and the cathode.

The compact electrochemical cell is connectable to a correspondingly small medical device. The medical device may be an implantable device, or an exploratory medical device that is deployed into the human vasculature, digestive tract, lungs, and other tissues for a shorter time than that of typical implantable devices.

The present invention accordingly provides an implantable medical device powered by an electrochemical cell of the invention, the casing sidewall defining the proximal opening of the casing of the electrochemical cell being joined to the medical device housing. The cell may include a flange at the proximal casing opening where connection to the device is made.

The present invention also provides a method of making an electrochemical cell comprising the steps of:
a) forming a casing comprising a proximal opening, a distal opening, and a sidewall surrounding an enclosed volume;
b) sealing a terminal pin within a glass-to-metal seal disposed in the proximal opening and within the enclosed volume of the casing;
c) inserting an insulator within the enclosed volume along a first portion of the casing sidewall;
d) forming a first electrode by placing first electrode active material within the insulator and in electrical contact with the terminal pin;
e) placing a separator disc comprising a material that permits electrolyte flow between and to opposed first and second major faces spaced apart from each other by a disc thickness providing a disc edge contiguously with a second portion of the casing sidewall and in contact with the first electrode, wherein the first major disc face is in contact with the first electrode contained within the insulator;
f) contacting the separator disc and the first electrode with an electrolyte;
g) forming a second, counter electrode by placing second electrode active material in contact with the separator disc and with a third portion of the casing sidewall; and
h) sealing the distal end of the casing with a lid, wherein the lid comprises a substantially planar inner face contacting the second electrode active material and supporting a protrusion that extends beyond the planar inner lid face into the second electrode active material;
wherein either the first electrode is a cathode and the second, counter electrode is an anode, or the first electrode is an anode and the second, counter electrode is a cathode.

In one embodiment, the first electrode is a cathode and the second, counter electrode is an anode.

The method may include joining the insulator to the glass-to-metal seal with an elastomeric material. The cathode active material may be provided as a powder, and the cathode formed by pressing the powder. The method may further comprise placing the protrusion of the casing lid in interfering contact with the anode. The method may also include placing the anode, the separator disc, and the cathode in compression with the lid.

The foregoing and additional objects, advantages, and characterizing features of the present invention will become increasingly more apparent upon a reading of the following detailed description together with the included drawings.

### BRIEF DESCRIPTION OF THE DRAWINGS

The present invention will be described by reference to the following drawings, in which like numerals refer to like elements, and in which:
FIG. 1 is a perspective view of a casing of a compact electrochemical cell of the invention;
FIG. 2 is a cross-sectional view taken along line 2-2 of FIG. 1;
FIG. 3 is a cross-sectional view of the casing of FIG. 2 with a glass-to-metal seal joined thereto, and also showing the joining of the casing to a medical device;
FIG. 4 is a cross-sectional view of an alternative casing of the compact cell including a flange at the proximal opening thereof, and showing the joining of the casing to a medical device at the flange;
FIG. 5 is a cross-sectional view of the cell casing in an inverted position, and with an elastomeric material dispensed on the glass-to-metal seal;
FIG. 6 is a cross-sectional view of the partially fabricated cell with an insulator bag fitted therein and joined to the glass-to-metal seal by the elastomeric material;
FIG. 7 is a cross-sectional view of the partially fabricated cell with the insulator bag filled with powdered cathode active material;
FIG. 8 is a cross-sectional view of the partially fabricated cell with the cathode active material compressed to form the cathode, and with a separator disc placed within the casing in contact with the cathode;
FIG. 9 is a cross-sectional view of the partially fabricated cell with anode active material disposed above the separator disc;
FIG. 10 is a cross-sectional view of the partially fabricated cell with the lid placed over the distal opening of the casing and applying compression to the anode, separator disc, and cathode; and
FIG. 11 is a cross-sectional view of the completed of cell fabrication, with the lid being welded and sealed to the distal casing opening.

The present invention will be described in connection with a preferred embodiments, however, it should be understood that there is no intent to limit the invention to the embodiments described. On the contrary, the intent is to cover all alternatives, modifications, and equivalents as may be included within the spirit and scope of the invention as defined by the appended claims.

### DETAILED DESCRIPTION OF THE PREFERRED EMBODIMENTS

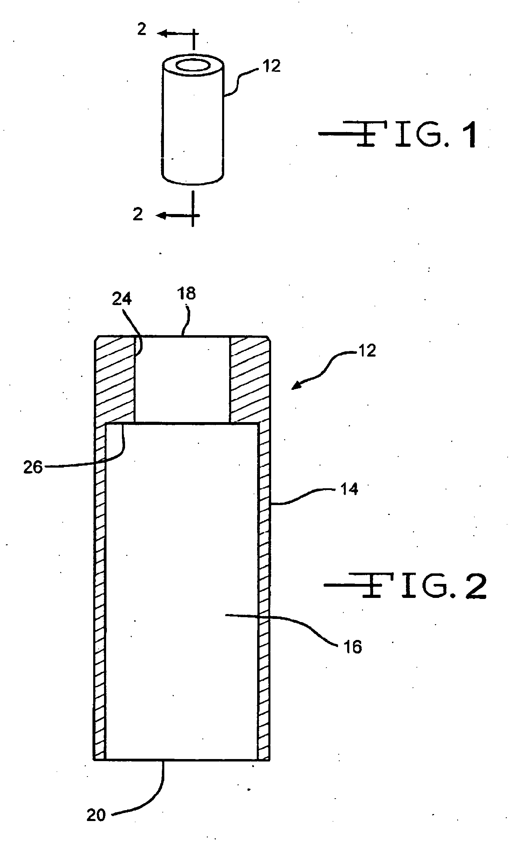

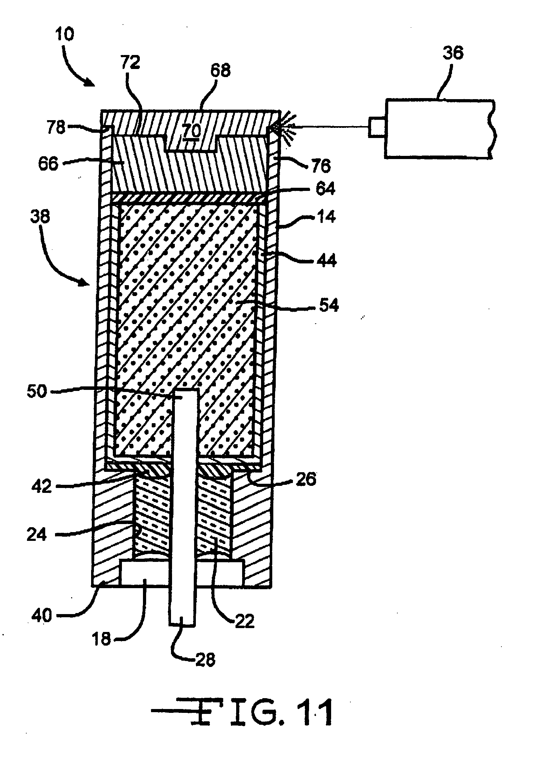

Turning now to the drawings FIG. 11 is a perspective view of an electrochemical cell 10 including a casing 12 (FIG. 1) comprised of a sidewall 14 surrounding an enclosed volume 16. The casing 12 has a proximal opening 18 and a distal opening 20 at the respective ends of the sidewall 14. The casing sidewall 14 may have a cylindrical shape, a rectangular shape, a prismatic shape, or certain other irregular shapes that can be made by the processes used to make cell casings. The casing 12 is made of metal, such as stainless steel, titanium, nickel, aluminum, or other suitable electrically conductive materials. One preferred casing material is titanium.

In a typical prior art electrochemical cell used to power an implantable medical device, the casing is stamped or deep drawn to its final shape and mated and sealed to a lid or a second case half. However, these forming processes cannot achieve the dimensions and tolerances required for the highly compact cells of the present invention. In one embodiment of the present invention, the casing 12 of FIG. 1 is cylindrically shaped with a diameter of 0.5 cm, a length of 1.25 cm, and a volume of less than 0.25 cm³. A stamping or deep drawing process is not suitable for forming such a casing at the required tolerances.

To produce such a casing 12 according to the present invention, a short piece of cylindrical rod stock is chemically and/or physically machined to a final shape such as that shown in FIGs. 1 and 2. Suitable machining processes include mechanical lathe turning/boring, electrical discharge machining, electroforming, laser machining, and the like. These processes are advantageous over the conventional stamping or deep drawing case fabrication processes, because more precise internal and external tolerances can be achieved. Additionally, machining the casing 12 does not produce internal stresses that a stamping process may cause. Stresses or micro-fractures in stamped or drawn casings of the size required for the present invention are susceptible to corrosion cracking, which can lead to loss of hermeticity through the casing wall and failure of the cell.

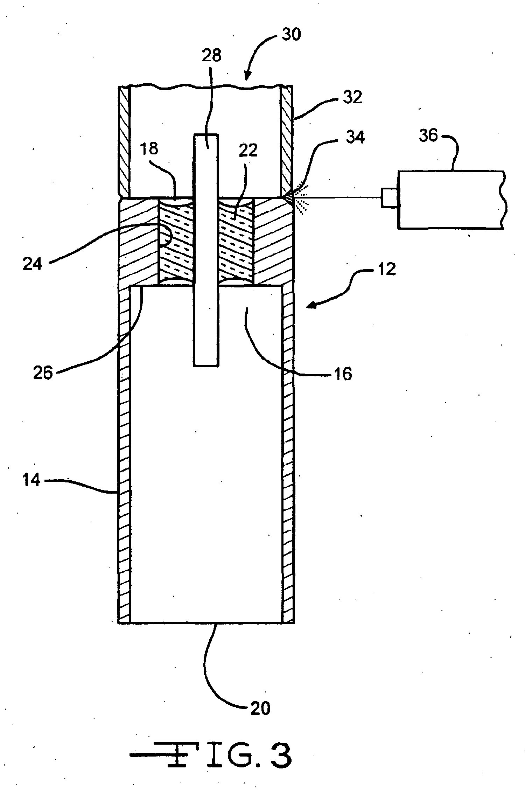

Referring also to FIG. 3, a glass-to-metal seal (GTMS) 22 is disposed in the proximal opening 18 and within the enclosed volume 16 of the casing 12. In one preferred embodiment, casing side wall 14 includes a narrowed region 24 that is contiguous with the GTMS 22. In that manner, the diameter of the GTMS 22 may be less than the inside diameter (or other cross section) of the casing 12, making it less susceptible to failure. However, in embodiments in which the diameter of the casing 12 is sufficiently small, the narrowed region 24 is not necessary, and the GTMS 22 may be bonded directly to the inner surface of the casing sidewall 14. Additionally, it will be apparent that when a narrowed region 24 is provided, the formed shoulder 26 may have a shape other than perpendicular to the casing sidewall 14 (as shown in FIG. 3), depending upon the machining process used to make the casing 12.

A terminal pin 28 extends from outside the casing through the proximal opening 18 and into the enclosed volume 16 of the casing 12. The terminal pin 28 forms an annular space within the narrowed region 24. The GTMS 22 is formed within this annulus, and provides a hermetic seal between the terminal pin 28 and the casing 12. The terminal pin 32 is of molybdenum, aluminum, nickel alloy, or stainless steel, the former being preferred. The sealing glass in GTMS 22 is of a corrosion resistant type having up to about 50% by weight silicon such as CABAL 12, TA 23, FUSITE 425 or FUSITE 435.

The compact electrochemical cell 10 is connectable to a correspondingly small medical device. The medical device may be an implantable device, or an exploratory medical device that may be deployed into the human vasculature, digestive tract, lungs, or other tissues. Referring again to FIG. 3, the cell is preferably connected to the medical device 30 at the proximal opening 18 of the cell casing 12. In one embodiment, the cell casing 12 is joined and hermetically sealed to the housing 32 of the medical device 30 by weld 34, which may be formed by scanning a laser welding device 36 around the perimeter of the junction between the medical device 30 and the casing 12.

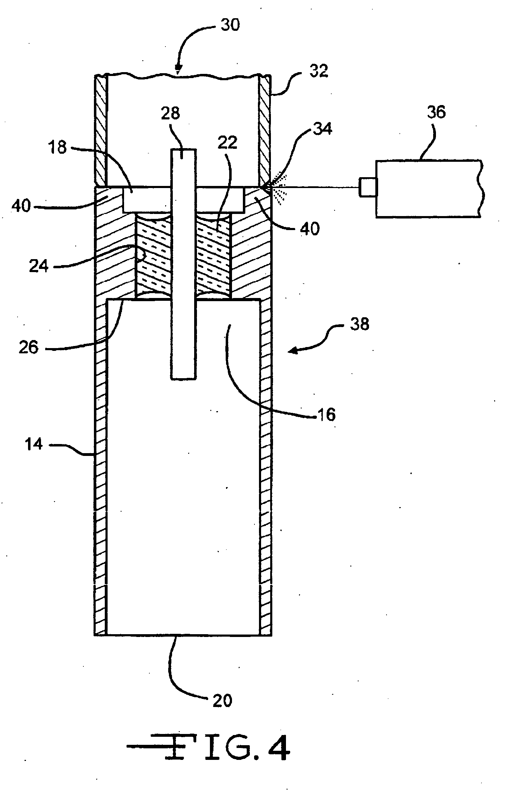

FIG. 4 is a cross-sectional view of an alternative casing 38 of the compact cell, including a flange 40 at the proximal opening 18 thereof. By providing flange 40 integral with the casing 38, the distance between the weld 34 and the GTMS 22 and other internal components is increased. In that manner, the amount of heat that is conducted into such components is reduced and thermal damage to the cell components during welding is avoided. It will be apparent that although the joining of either one of the casings 12 or 38 to the medical device 30 is shown in FIGS. 3 and 4 as occurring prior to the completion of cell fabrication, such joining may be performed after fabrication of the cell 10 of FIG. 11 is completed.

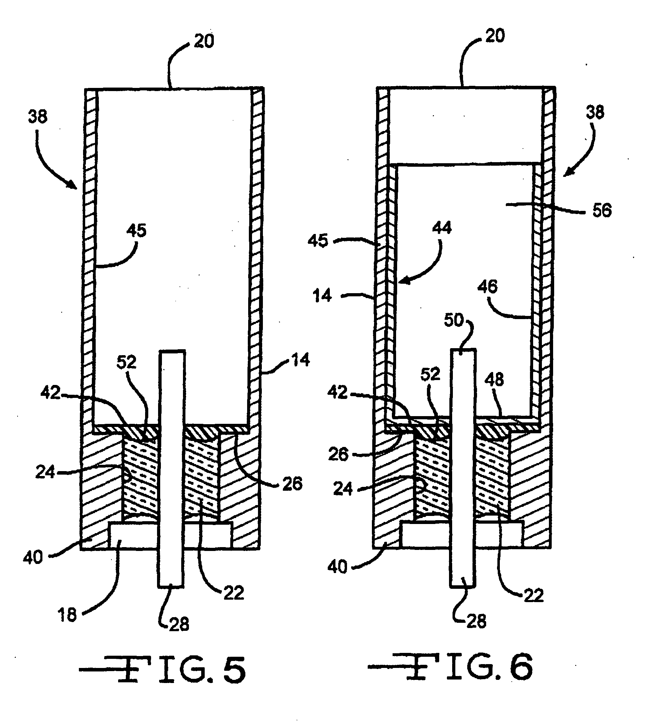

FIG. 5 is a cross-sectional view of the cell casing 38 in an inverted position. In one preferred embodiment, a liquid elastomeric material 42 is dispensed on the glass-to-metal seal 22, and on the shoulder 26 of the narrowed region 24 of the casing 38, if the narrowed region 24 is provided. The elastomeric material 42 is preferably a polysiloxane that cures to a solid at room temperature.

Referring also to FIG. 6, prior to allowing the elastomeric material to cure to a solid, an insulator 44 is inserted into the casing 38 along a first portion 45 of the casing sidewall 14 and seated onto the elastomeric material 42. The insulator 44 can be of any of the hereinafter discussed materials that are suitable for the separator, although it is preferably of polyethylenetetrafluoroethylene (ETFE). A separator is of a material that permits ionic flow there through while maintaining physical separation between the opposite polarity active materials. Likewise, the insulator must maintain physical segregation between the anode and the cathode, but it does not need to permit ionic flow because the casing sidewall is directly opposite the cathode active material contained inside it, as will be discussed presently.

The insulator 44 is preferably formed as a bag having a sidewall 46 and a bottom 48, through which the proximal end 50 of the terminal pin 28 protrudes. Alternatively, insulator 44 can be formed as a sleeve, with its inner edge seated into the elastomeric material 42. Use of the elastomeric material 42 is preferred because it fills any small void formed between the terminal pin and the casing at the inner surface 52 of the GTMS 22. The elastomeric material also seals any gap that is present between the terminal pin and the insulator, thereby allowing for greater positional and size variability of the through hole in the bag bottom 48, if such is provided. In that manner, loose particles of cathode active material are prevented from bypassing the insulator and making contact with the casing.

Referring to FIG. 11, cell 10 is preferably built in a case negative design with the casing 12 serving as the anode terminal. However, the cell can also be built in a case-positive design. In that respect, the electrode 54 would be the anode and the other electrode 66 would be the cathode. Both the case-negative and case-positive electrode designs are well known by those skilled in the art.

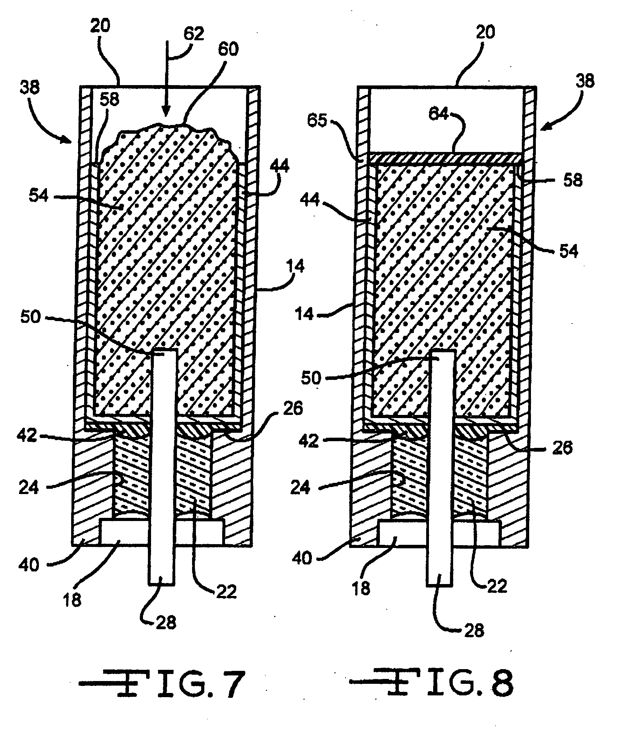

Turning now to the preferred case-negative cell design, and referring to FIG. 7, the cathode of the cell is shown being formed. In one preferred embodiment, a quantity of cathode active material 54, such as silver vanadium oxide in a powdered form, is filled into the volume 56 (FIG. 6) within the insulator 44 until it is mounded up beyond the upper edge 58 thereof. The mound 60 of cathode active material 54 is then compressed further into the casing 14 using a piston (not shown) or other suitable tool as indicated by arrow 62. The cathode active material 54 is then pressed until its upper surface is substantially coplanar with the upper edge 58 of the insulator 44. The cathode active material 54 is also in electrical contact with the proximal end 50 of the terminal pin 28.

Other cathode active materials that are useful with the present invention include copper silver vanadium oxide (CSVO), V₂O₅, MnO₂, LiCoO₂, LiNiO₂ LiMn₂O₄, TiS₂, Cu₂S, FeS, FeS₂, copper oxide, copper vanadium oxide, Ag₂O, Ag₂O₂, CuF₂, Ag₂CrO₄, MnO₂, and mixtures thereof. In any event, the cathode active material is typically formed into a mixture of about 1% to 5% of a conductive diluent and about 1% to 5% of a binder material, by weight, prior to being used in the cell. Suitable conductive diluents include acetylene black, carbon black and/or graphite. Metals such as nickel, aluminum, titanium and stainless steel in powder form are also useful as conductive diluents.

A suitable binder material is preferably a thermoplastic polymeric material. The term thermoplastic polymeric material is used in its broad sense and any polymeric material which is inert in the cell and which passes through a thermoplastic state, whether or not it finally sets or cures, is included within the term "thermoplastic polymer". Representative binder materials include polyethylene, polypropylene, polyimide, and fluoropolymers such as fluorinated ethylene, fluorinated propylene, polyvinylidene fluoride (PVDF), and polytetrafluoroethylene (PTFE). Natural rubbers are also useful as the binder material with the present invention.

Referring to FIG. 8, a separator disc 64 is next disposed contiguously with a second portion 65 of the side wall 14 of the casing 38 and in contact with the cathode 54. The separator disc 64 is also preferably abutted against the upper edge 58 of the insulator 44, and is in an interference fit with the casing sidewall 14. In that manner, the separator disc 64 seals against the sidewall 14 and the insulator 44, thereby preventing any cathode active material from contacting the casing 38. The separator disc 64 is of electrically insulative material that is chemically unreactive with the anode and cathode active materials and both chemically unreactive with and insoluble in the electrolyte that is subsequently added to the cell. In addition, the separator material has a degree of porosity sufficient to allow flow there through of the electrolyte during the electrochemical reaction of the cell. Illustrative separator materials include fabrics woven from fluoropolymeric fibers including polyvinylidine fluoride, polyethylenetetrafluoroethylene, and polyethylenechlorotrifluoroethylene used either alone or laminated with a fluoropolymeric microporous film, non-woven glass, polypropylene, polyethylene, glass fiber materials, ceramics, polytetrafluoroethylene membrane commercially available under the designation ZITEX (Chemplast Inc.), polypropylene membrane commercially available under the designation CELGARD (Celanese Plastic Company, Inc.), a membrane commercially available under the designation DEXIGLAS (C. H. Dexter, Div., Dexter Corp.), and a membrane commercially available under the designation TONEN^{®}.

A small quantity of electrolyte (not shown) is then dispensed onto the separator disc 64, permeating and wetting the cathode 54 and the separator disc 64. In order to saturate the cathode 54 and separator disc 64, the electrolyte may be delivered in multiple aliquots. A suitable electrolyte has an inorganic, ionically conductive salt dissolved in a nonaqueous solvent, and more preferably, the electrolyte includes an ionizable lithium salt dissolved in a mixture of aprotic organic solvents comprising a low viscosity solvent and a high permittivity solvent. The inorganic, ionically conductive salt serves as the vehicle for migration of the anode ions to intercalate or react with the cathode active materials. Known lithium salts that are useful as a vehicle for transport of alkali metal ions from the anode to the cathode include LiPF₆, LiBF₄, LiAsF₆, LiSbF₆, LiClO₄, LiO2, LiAlCl₄, LiGaCl₄, LiC(SO₂CF₃)₃, LiN(SO₂CF₃)ₐ, LiSCN, LiO₃SCF₃, LiC₆FSO₃, LiO₂CCF₃, LiSO₆F, LiB(C₆H₅)₄, LiCF₃SO₃, and mixtures thereof.

Suitable low viscosity solvents invention include esters, linear and cyclic ethers and dialkyl carbonates such as tetrahydrofuran (THF), methyl acetate (MA), diglyme, triglyme, tetraglyme, dimethyl carbonate (DMC), 1,2-dimethoxyethane (DME), 1,2-diethoxyethane (DEE), 1-ethoxy,2-methoxyethane (EME), ethyl methyl carbonate, methyl propyl carbonate, ethyl propyl carbonate, diethyl carbonate, dipropyl carbonate, and mixtures thereof, and suitable high permittivity solvents include cyclic carbonates, cyclic esters and cyclic amides such as propylene carbonate (PC), ethylene carbonate (EC), butylene carbonate, acetonitrile, dimethyl sulfoxide, dimethyl formamide, dimethyl acetamide, γ-valerolactone, γ-butyrolactone (GBL), N-methylpyrrolidinone (NMP), and mixtures thereof. The preferred electrolyte for a lithium anode is 0.8M to 1.5M LiAsF₆ or LiPF₆ dissolved in a 50:50 mixture, by volume, of propylene carbonate as the preferred high permittivity solvent and 1,2-dimethoxyethane as the preferred low viscosity solvent.

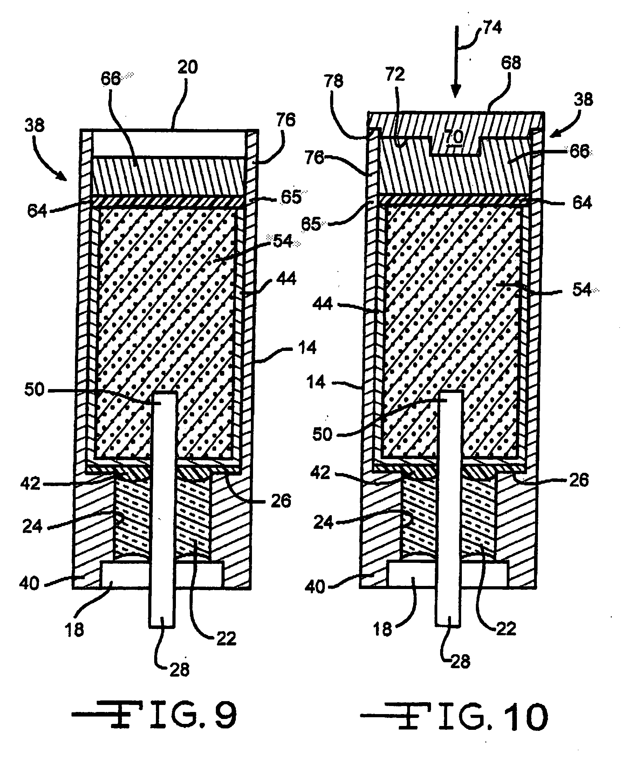

Referring to FIG. 9, the anode of the cell is next formed. In one preferred embodiment, a pre-formed slug 66 of anode active material is inserted into the casing 14. The slug may be cylindrical as shown in the drawings, or spherical in shape. A preferred anode active material is lithium. The slug is preferably provided with a diameter that is at or near the inside diameter of casing 38.

Referring to FIG. 10, the lid 68 of the cell is then seated on the distal casing opening 20. The lid 68 includes a protrusion 70 extending from the lower surface 72 thereof, such that the lid 68 can be forced (per arrow 74) against anode slug 66 into an interference fit therewith. Anode active material 66 may be a malleable material that undergoes plastic deformation and flows within the remaining volume of the casing 38. The dimensions of the casing 38, the lid protrusion 70, and the anode slug 66 are selected such that when the lid 68 is fully seated on the casing 38, the anode slug has deformed into contact with the separator disc 64 and a third portion 76 of casing side wall 14. Forcing of the lid protrusion 70 against anode 66 preferably causes the lithium to completely fill the remaining available space within the casing 38, and also places the anode 66, the separator disc 64, and the cathode 54 in compression against each other. In that manner, electron and ion transport between the anode 66 and the cathode 54 through the separator disc 64 is facilitated.

Lid 68 is preferably made of the same metal as casing 38. Suitable metals include stainless steel, titanium, nickel, aluminum, with titanium being preferred. It will be apparent that protrusion 70 may be provided in other shapes, such as a conical shape, or a truncated conical shape. Lid 68 may be further provided with a shoulder 78, which provides an improved fit to the distal opening 20 of the casing 38.

Turning finally to FIG. 11, the lid 68 is sealed to the distal casing opening 20 to hermetically enclose the contents of the cell 10. In one preferred embodiment, a laser 36 is used to weld the lid 68 to the casing 38.

A compact electrochemical cell according to the present invention was fabricated with a titanium casing and lid as shown in FIG. 11. The casing had an outside diameter of about 2.34 millimeters (mm), a length of about 5.69 mm, and a side wall thickness of about 0.15 mm. The casing had a narrowed region of about 1.27 mm in diameter and about 1.17 mm in length within which a glass-to-metal seal was formed. The terminal pin was of molybdenum having a diameter of about 0.38 mm. The cathode comprised a mixture of, by weight, about 94% silver vanadium oxide, 3% graphite as a conductive diluent and about 3% PTFE binder filled to a depth of about 3.30 mm. The anode was of lithium having a height of about 0.76 mm. Direct physical contact between the anode and cathode was prevented by an intermediate TONEN^{®} separator. The electrolyte comprised 1.0M LiAsF₆ dissolved in a 50:50 mixture, by volume, of propylene carbonate and 1,2-dimethoxyethane.

Thus, the highly compact electrochemical cell 10 of the present invention is advantageous over other cell designs for several reasons. The cell 10 is simplified in construction. Non-active components such as the anode and cathode current collector screens, certain insulators, and an electrolyte fill plug that are typical of prior art cells have been eliminated. The manufacturing steps to provide these in the cell are also eliminated, thereby lowering cell cost and increasing manufacturing throughput.

It is, therefore, apparent that there has been provided, in accordance with the present invention, a highly compact electrochemical cell.

## Claims

1. An electrochemical cell (10) comprising:
a) a casing (12) comprising a proximal opening (18), a distal opening (20), and a sidewall (14) surrounding an enclosed volume (16);
b) a glass-to-metal seal (22) disposed in the proximal opening (18) and within the enclosed volume (16) of the casing (12);
c) a terminal pin (28) extending from outside the casing (12) through the proximal opening (18) and through the glass-to-metal seal (22) into the enclosed volume (16) of the casing (12);
d) an electrically non-conductive insulator (44) disposed along a first portion (45) of the casing sidewall (14);
e) a first electrode (54) comprising first electrode active material contained within the insulator (44) and in electrical contact with the terminal pin (28);
f) a separator disc (64) comprising a material having a degree of porosity sufficient to allow electrolyte flow between and to opposed first and second major faces spaced apart from each other by a disc thickness providing a disc edge that is contiguous with a second portion (65) of the casing sidewall (14) and wherein the first major disc face is in contact with the first electrode (54) contained within the insulator (44);
g) a second, counter electrode (66) comprising second electrode active material in contact with the separator disc (64) and with a third portion (76) of the casing sidewall (14);
h) a lid (68) sealed to the distal opening (20) of the casing (12), wherein the lid (68) comprises a substantially planar inner face (72) contacting the second electrode active material and supporting a protrusion (70) that extends beyond the planar inner lid face (72) into the second electrode active material; and
i) an electrolyte activating the first and second electrodes (54; 66);
wherein either the first electrode (54) is a cathode and the second, counter electrode (66) is an anode, or the first electrode (54) is an anode and the second, counter electrode (66) is a cathode.

2. The cell of claim 1 wherein the first electrode (54) is a cathode and the second, counter electrode (66) is an anode.

3. The cell of claim 1 or claim 2 wherein the casing (12) is of a cylindrical shape.

4. The cell of claim 1 or claim 2 wherein the casing (12) is of a rectangular shape.

5. The cell of claim 1 or claim 2 wherein the casing sidewall (14) comprises a narrowed region (24) contiguous with the glass-to-metal seal (22).

6. The cell of claim 1 or claim 2 further comprising an elastomeric material (42) that joins the insulator (44) to the glass-to-metal seal (22).

7. The cell of claim 6 wherein the insulator (44) is formed as a bag having a sidewall (46) and a bottom (48), and wherein the bottom (48) is joined to the glass-to-metal seal (22) by the elastomeric material (42).

8. The cell of claim 1 or claim 2 wherein the insulator (44) includes an outer edge (58) and the separator disc (64) is in contact with the outer insulator edge (58).

9. The cell of claim 1 or claim 2 wherein the lid (68) applies a compressive force to the anode (66), the separator disc (64), and the cathode (54).

10. The cell of claim 1 or claim 2 further comprising a flange (40) at the proximal casing opening (18) that is connectable to an implantable medical device (30).

11. The cell of claim 1 or claim 2 wherein the casing (12) is made of titanium.

12. The cell of claim 1 or claim 2 wherein the cathode (54) is formed by pressing a powder of cathode active material.

13. The cell of claim 1 or claim 2 wherein the cathode active material (54) is selected from the group consisting of silver vanadium oxide, copper silver vanadium oxide, V₂O₅, MnO₂, LiCoO₂, LiNiO₂, LiMn₂O₄, TiS₂, Cu₂S, FeS, FeS₂, copper oxide, copper vanadium oxide, Ag₂O, Ag₂O₂, CuF₂, Ag₂CrO₄, MnO₂, and mixtures thereof.

14. The cell of claim 1 or claim 2 wherein the anode active material (66) is lithium.

15. The cell of claim 1 or claim 2 wherein the electrolyte is comprised of at least one lithium salt selected from the group consisting of LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆FSO₃, LiO₂CCF₃, LiSO₆F, LiB(C₆H₅)₄, LiCF₃SO₃, and mixtures thereof dissolved in at least one solvent selected from the group consisting of tetrahydrofuran, methyl acetate, diglyme, triglyme, tetraglyme, dimethyl carbonate, 1,2-dimethoxyethane, 1,2-diethoxyethane, 1-ethoxy,2-methoxyethane, ethyl methyl carbonate, methyl propyl carbonate, ethyl propyl carbonate, diethyl carbonate, dipropyl carbonate, propylene carbonate, ethylene carbonate, butylene carbonate, acetonitrile, dimethyl sulfoxide, dimethyl formamide, dimethyl acetamide, γ-valerolactone, γ-butyrolactone, N-methylpyrrolidinone, and mixtures thereof.

16. The cell of claim 1 or claim 2 wherein the protrusion (70) is spaced from the casing sidewall (14).

17. A method of making an electrochemical cell (10) comprising the steps of:
a) forming a casing (12) comprising a proximal opening (18), a distal opening (20), and a sidewall (14) surrounding an enclosed volume (16);
b) sealing a terminal pin (28) within a glass-to-metal seal (22) disposed in the proximal opening (18) and within the enclosed volume (16) of the casing (12);
c) inserting an insulator (44) within the enclosed volume (16) along a first portion (45) of the casing sidewall (14);
d) forming a first electrode (54) by placing first electrode active material within the insulator (44) and in electrical contact with the terminal pin (28);
e) placing a separator disc (64) comprising a material having a degree of porosity sufficient to allow electrolyte flow between and to opposed first and second major faces spaced apart from each other by a disc thickness providing a disc edge contiguously with a second portion (65) of the casing sidewall (14) and in contact with the first electrode (54), wherein the first major disc face is in contact with the first electrode (54) contained within the insulator (44);
f) contacting the separator disc (64) and the first electrode (54) with an electrolyte;
g) forming a second, counter electrode (66) by placing second electrode active material in contact with the separator disc (64) and with a third portion (76) of the casing sidewall (14); and
h) sealing the distal end (20) of the casing (12) with a lid (68), wherein the lid (68) comprises a substantially planar inner face (72) contacting the second electrode active material and supporting a protrusion (70) that extends beyond the planar inner lid face (72) into the second electrode active material;
wherein either the first electrode (54) is a cathode and the second, counter electrode (66) is an anode, or the first electrode (54) is an anode and the second, counter electrode (66) is a cathode.

18. The method of claim 17 wherein the first electrode (54) is a cathode and the second, counter electrode (66) is an anode.

19. The method of claim 17 or claim 18 further comprising joining the insulator (44) to the glass-to-metal seal (22) with an elastomeric material (42).

20. The method of claim 17 or claim 18 wherein the cathode active material is provided as a powder and the cathode (54) is formed by pressing the powder.

21. The method of claim 17 or claim 18 further comprising placing the anode (66), the separator disc (64), and the cathode (54) in compression with the lid (68).

22. The method of claim 17 or claim 18 including providing the protrusion (70) being spaced apart from the casing sidewall (14).

23. An implantable medical device (30) powered by an electrochemical cell (10) as defined in Claim 1, the casing sidewall (14) defining the proximal opening (18) of the casing (12) of the electrochemical cell (10) being joined to the medical device housing (32).

24. An electrochemical cell according to claim 1 or a medical device according to claim 23, having the features set out in any one of or any combination of claims 2 to 16.

## Patentansprüche

1. Elektrochemische Zelle (10), die Folgendes umfasst:
a) einen Mantel (12) mit einer proximalen Öffnung (18), einer distalen Öffnung (20) und einer ein umschlossenes Volumen (16) umgebenden Seitenwand (14);
b) eine Glas-Metall-Dichtung (22), die in der proximalen Öffnung (18) und innerhalb des umschlossenen Volumens (16) des Mantels (12) angeordnet ist;
c) einen Anschlussbolzen (28), der von außerhalb des Mantels (12) durch die proximale Öffnung (18) und durch die Glas-Metall-Dichtung (22) in das umschlossene Volumen (16) des Mantels (12) verläuft;
d) einen elektrisch nichtleitenden Isolator (44), der entlang einem ersten Abschnitt (45) der Mantelseitenwand (14) angeordnet ist;
e) eine erste Elektrode (54), die ein erstes aktives Elektrodenmaterial umfasst, das in dem Isolator (44) in elektrischem Kontakt mit dem Anschlussbolzen (28) enthalten ist;
f) eine Separatorscheibe (64), die ein Material mit einem Grad an Porosität umfasst, das ausreicht, damit Elektrolyt zwischen und zu gegenüberliegenden ersten und zweiten Hauptflächen fließen kann, die voneinander durch eine Scheibendicke getrennt sind, die einen Scheibenrand ergibt, der an einen zweiten Abschnitt (65) der Mantelseitenwand (14) angrenzt, und wobei die erste Hauptscheibenfläche mit der in dem Isolator (44) enthaltenen ersten Elektrode (54) in Kontakt ist;
g) eine zweite Elektrode, die Gegenelektrode (66), die ein zweites aktives Elektrodenmaterial in Kontakt mit der Separatorscheibe (64) und mit einem dritten Abschnitt (76) der Mantelseitenwand (14) umfasst;
h) einen Deckel (68) zum Verschließen der distalen Öffnung (20) des Mantels (12), wobei der Deckel (68) eine im Wesentlichen planare Innenfläche (72) umfasst, die mit dem zweiten aktiven Elektrodenmaterial in Kontakt ist und einen Vorsprung (70) trägt, der über die planare Innendeckelfläche (72) in das zweite aktive Elektrodenmaterial verläuft; und
i) einen Elektrolyt, der die erste und zweite Elektrode (54; 66) aktiviert;
wobei entweder die erste Elektrode (54) eine Kathode und die zweite Elektrode, die Gegenelektrode (66), eine Anode ist oder die erste Elektrode (54) eine Anode und die zweite Elektrode, die Gegenelektrode (66), eine Kathode ist.

2. Zelle nach Anspruch 1, wobei die erste Elektrode (54) eine Kathode ist und die zweite Elektrode, die Gegenelektrode (66), eine Anode ist.

3. Zelle nach Anspruch 1 oder Anspruch 2, wobei der Mantel (12) eine zylindrische Form hat.

4. Zelle nach Anspruch 1 oder Anspruch 2, wobei der Mantel (12) eine rechteckige Form hat.

5. Zelle nach Anspruch 1 oder Anspruch 2, wobei die Mantelseitenwand (14) eine verengte Region (24) aufweist, die an die Glas-Metall-Dichtung (22) angrenzt.

6. Zelle nach Anspruch 1 oder Anspruch 2, die ferner ein elastomeres Material (42) aufweist, das den Isolator (44) an die Glas-Metall-Dichtung (22) fügt.

7. Zelle nach Anspruch 6, wobei der Isolator (44) als Sack mit einer Seitenwand (46) und einem Boden (48) gebildet ist und wobei der Boden (48) durch das elastomere Material (42) an die Glas-Metall-Dichtung (22) gefügt ist.

8. Zelle nach Anspruch 1 oder Anspruch 2, wobei der Isolator (44) einen Außenrand (58) aufweist und die Separatorscheibe (64) mit dem äußeren Isolatorrand (58) in Kontakt ist.

9. Zelle nach Anspruch 1 oder Anspruch 2, wobei der Deckel (68) eine Druckkraft auf die Anode (66), die Separatorscheibe (64) und die Kathode (54) aufbringt.

10. Zelle nach Anspruch 1 oder Anspruch 2, die ferner einen Flansch (40) an der proximalen Mantelöffnung (18) umfasst, der mit einer implantierbaren medizinischen Vorrichtung (30) verbunden werden kann.

11. Zelle nach Anspruch 1 oder Anspruch 2, wobei der Mantel (12) aus Titan gefertigt ist.

12. Zelle nach Anspruch 1 oder Anspruch 2, wobei die Kathode (54) durch Pressen eines Pulvers aus aktivem Kathodenmaterial gebildet ist.

13. Zelle nach Anspruch 1 oder Anspruch 2, wobei das aktive Kathodenmaterial (54) ausgewählt ist aus der Gruppe bestehend aus Silber-Vanadium-Oxid, Kupfer-Silber-Vanadium-Oxid, V₂O₅, MnO₂, LiCoO₂, LiNiO₂, LiMn₂O₄, TiS₂, Cu₂S, FeS, FeS₂, Kupferoxid, Kupfer-Vanadium-Oxid, Ag₂O, Ag₂O₂, CuF₂, Ag₂CrO₄, MnO₂ und Mischungen davon.

14. Zelle nach Anspruch 1 oder Anspruch 2, wobei das aktive Anodenmaterial (66) Lithium ist.

15. Zelle nach Anspruch 1 oder Anspruch 2, wobei der Elektrolyt aus wenigstens einem Lithiumsalz besteht, das ausgewählt ist aus der Gruppe bestehend aus LiPF₆, LiBF₄, LiAsF₆, LiSbF₆, LiClO₄, LiO₂, LiAlCl₄, LiGaCl₄, LiC (SO₂CF₃)₃, LiN(SO₂CF₃)₂, LiSCN, LiO₃SCF₃, LiC₆FSO₃, LiO₂CCF₃, LiSO₆F, LiB (C₆H₅) ₄, LiCF₃SO₃ und Mischungen davon, aufgelöst in wenigstens einem Lösungsmittel ausgewählt aus der Gruppe bestehend aus Tetrahydrofuran, Methylacetat, Diglyme, Triglyme, Tetraglyme, Dimethylcarbonat, 1,2-Dimethoxyethan, 1,2-Diethoxyethan, 1-Ethoxy, 2-Methoxyethan, Ethylmethylcarbonat, Methylpropylcarbonat, Ethylpropylcarbonat, Diethylcarbonat, Dipropylcarbonat, Propylencarbonat, Ethylencarbonat, Butylencarbonat, Acetonitril, Dimethylsulfoxid, Dimethylformamid, Dimethylacetamid, γ-Valerolacton, γ-Butyrolacton, N-Methylpyrrolidinon und Mischungen davon.

16. Zelle nach Anspruch 1 oder Anspruch 2, wobei der Vorsprung (70) von der Mantelseitenwand (14) beabstandet ist.

17. Verfahren zur Herstellung einer elektrochemischen Zelle (10), das die folgenden Schritte beinhaltet:
a) Ausbilden eines Mantels (12) mit einer proximalen Öffnung (18), einer distalen Öffnung (20) und einer ein umschlossenes Volumen (16) umgebenden Seitenwand (14);
b) Einschließen eines Anschlussbolzens (28) innerhalb einer Glas-Metall-Dichtung (22), die in der proximalen Öffnung (18) und in dem umschlossenen Volumen (16) des Mantels (12) angeordnet ist;
c) Einführen eines Isolators (44) innerhalb des umschlossenen Volumens (16) entlang einem ersten Abschnitt (45) der Mantelseitenwand (14);
d) Bilden einer ersten Elektrode (54) durch Platzieren eines ersten aktiven Elektrodenmaterials in dem Isolator (44) und in elektrischem Kontakt mit dem Anschlussbolzen (28);
e) Platzieren einer Separatorscheibe (64), die ein Material mit einem Grad an Porosität umfasst, das ausreicht, damit Elektrolyt zwischen und zu gegenüberliegenden ersten und zweiten Hauptflächen fließen kann, die voneinander durch eine Scheibendicke beabstandet sind, die einen Scheibenrand ergibt, der an einen zweiten Abschnitt (65) der Mantelseitenwand (14) und in Kontakt mit der ersten Elektrode (54) angrenzt, wobei die erste Hauptscheibenfläche mit der in dem Isolator (44) enthaltenen ersten Elektrode (54) in Kontakt ist;
f) Inkontaktbringen der Separatorscheibe (64) und der ersten Elektrode (54) mit einem Elektrolyt;
g) Bilden einer zweiten Elektrode, der Gegenelektrode (66), durch Platzieren von zweitem aktivem Elektrodenmaterial in Kontakt mit der Separatorscheibe (64) und mit einem dritten Abschnitt (76) der Mantelseitenwand (14); und
h) Verschließen des distalen Endes (20) des Mantels (12) mit einem Deckel (68), wobei der Deckel (68) eine im Wesentlichen planare Innenfläche (72) aufweist, die mit dem zweiten aktiven Elektrodenmaterial in Kontakt kommt und einen Vorsprung (70) trägt, der über die planare Innendeckelfläche (72) hinaus in das zweite aktive Elektrodenmaterial verläuft;
wobei entweder die erste Elektrode (54) eine Kathode und die zweite Elektrode, die Gegenelektrode (66), eine Anode ist oder die erste Elektrode (54) eine Anode und die zweite Elektrode, die Gegenelektrode (66), eine Kathode ist.

18. Verfahren nach Anspruch 17, wobei die erste Elektrode (54) eine Kathode und die zweite Elektrode, die Gegenelektrode (66), eine Anode ist.

19. Verfahren nach Anspruch 17 oder Anspruch 18, das ferner das Fügen des Isolators (44) an die Glas-Metall-Dichtung (22) mit einem elastomeren Material (42) beinhaltet.

20. Verfahren nach Anspruch 17 oder Anspruch 18, wobei das aktive Kathodenmaterial als ein Pulver bereitgestellt wird und die Kathode (54) durch Pressen des Pulvers gebildet wird.

21. Verfahren nach Anspruch 17 oder Anspruch 18, das ferner das Platzieren der Anode (66), der Separatorscheibe (64) und der Kathode (54) in Kompression mit dem Deckel (68) beinhaltet.

22. Verfahren nach Anspruch 17 oder Anspruch 18, das das Bereitstellen des Vorsprungs (70) in einem Abstand von der Mantelseitenwand (14) beinhaltet.

23. Implantierbare medizinische Vorrichtung (30), gespeist von einer elektrochemischen Zelle (10) nach Anspruch 1. wobei die Mantelseitenwand (14) die proximale Öffnung (18) des Mantels (12) der an das Gehäuse (32) der medizinischen Vorrichtung gefügten elektrochemischen Zelle (10) definiert.

24. Elektrochemische Zelle nach Anspruch 1 oder medizinische Vorrichtung nach Anspruch 23 mit den Merkmalen nach einem oder einer beliebigen Kombination der Ansprüche 2 bis 16.

## Revendications

1. Pile électrochimique (10), comprenant :
a) un boîtier (12) comprenant une ouverture proximale (18), une ouverture distale (20), et une paroi latérale (14) entourant un volume renfermé (16) ;
b) un joint d'étanchéité verre-métal (22) disposé dans l'ouverture proximale (18) et à l'intérieur du volume renfermé (16) du boîtier (12) ;
c) une broche-borne (28) qui s'étend à partir de l'extérieur du boîtier (12) à travers l'ouverture proximale (18) et à travers le joint d'étanchéité verre-métal (22) jusque dans le volume renfermé (16) du boîtier (12) ;
d) un isolateur électriquement non conducteur (44) disposé le long d'une première partie (45) de la paroi latérale du boîtier (14) ;
e) une première électrode (54) comprenant une première matière active d'électrode contenue dans l'isolateur (44) et en contact électrique avec la broche-borne (28) ;
f) un disque séparateur (64) comprenant un matériau ayant un degré de porosité suffisant pour permettre à un électrolyte de circuler entre et jusqu'à une première face principale et une deuxième face principale opposées, séparées l'une de l'autre par une épaisseur de disque formant un bord de disque qui est contigu avec une deuxième partie (65) de la paroi latérale du boîtier (14) et la première face principale du disque étant en contact avec la première électrode (54) contenue dans l'isolateur (44);
g) une deuxième, contre-électrode (66) comprenant une deuxième matière active d'électrode en contact avec le disque séparateur (64) et avec une troisième partie (76) de la paroi latérale du boîtier (14) ;
h) un couvercle (68) appliqué hermétiquement sur l'ouverture distale (20) du boîtier (12), le couvercle (68) comprenant une face interne sensiblement plane (72) en contact avec la deuxième matière active d'électrode et portant une partie saillante (70) qui s'étend au-delà de la face interne plane du couvercle (72) dans la deuxième matière active d'électrode ; et
i) un électrolyte activant la première électrode et la deuxième électrode (54 ; 66) ;
dans laquelle soit la première électrode (54) est une cathode et la deuxième, contre-électrode (66) est une anode, soit la première électrode (54) est une anode et la deuxième, contre-électrode (66) est une cathode.

2. Pile selon la revendication 1, dans laquelle la première électrode (54) est une cathode et la deuxième, contre-électrode (66) est une anode.

3. Pile selon la revendication 1 ou la revendication 2, dans laquelle le boîtier (12) est de forme cylindrique.

4. Pile selon la revendication 1 ou la revendication 2, dans laquelle le boîtier (12) est de forme rectangulaire.

5. Pile selon la revendication 1 ou la revendication 2, dans laquelle la paroi latérale du boîtier (14) comprend une région resserrée (24) contiguë avec le joint d'étanchéité verre-métal (22).

6. Pile selon la revendication 1 ou la revendication 2, comprenant en outre un matériau élastomère (42) qui réunit l'isolateur (44) au joint d'étanchéité verre-métal (22).

7. Pile selon la revendication 6, dans laquelle l'isolateur (44) est formé comme une poche ayant une paroi latérale (46) et un fond (48), et dans laquelle le fond (48) est réuni au joint d'étanchéité verre-métal (22) par le matériau élastomère (42).

8. Pile selon la revendication 1 ou la revendication 2, dans laquelle l'isolateur (44) comprend un bord externe (58) et le disque séparateur (64) est en contact avec le bord externe (58) de l'isolateur.

9. Pile selon la revendication 1 ou la revendication 2, dans laquelle le couvercle (68) applique une force de compression à l'anode (66), au disque séparateur (64), et à la cathode (54).

10. Pile selon la revendication 1 ou la revendication 2, comprenant en outre une bride (40) au niveau de l'ouverture proximale du boîtier (18), qui peut être connectée à un dispositif médical implantable (30).

11. Pile selon la revendication 1 ou la revendication 2, dans laquelle le boîtier (12) est en titane.

12. Pile selon la revendication 1 ou la revendication 2, dans laquelle la cathode (54) est formée par compression d'une poudre de matière active cathodique.

13. Pile selon la revendication 1 ou la revendication 2, dans laquelle la matière active cathodique (54) est sélectionnée dans le groupe constitué de l'oxyde d'argent et de vanadium, de l'oxyde de cuivre, d'argent et de vanadium, de V₂O₅, MnO₂, LiCoO₂, LiNiO₂, LiMn₂O₄, TiS₂, Cu₂S, FeS, FeS₂, de l'oxyde de cuivre, de l'oxyde de cuivre et de vanadium, de Ag₂O, Ag₂O₂, CuF₂, Ag₂CrO₄, MnO₂, et de mélanges de ceux-ci.

14. Pile selon la revendication 1 ou la revendication 2, dans laquelle la matière active anodique (66) est le lithium.

15. Pile selon la revendication 1 ou la revendication 2, dans laquelle l'électrolyte se compose d'au moins un sel de lithium sélectionné dans le groupe constitué de LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆FSO₃, LiO₂CCF₃, LiSO₆F, LiB (C₆H₅) ₄, LiCF₃SO₃, et de mélanges de ceux-ci dissous dans au moins un solvant sélectionné dans le groupe constitué du tétrahydrofurane, de l'acétate de méthyle, du diglyme, du triglyme, du tétraglyme, du carbonate de diméthyle, du 1,2-diméthoxyéthane, du 1,2-diéthoxyéthane, du 1-éthoxy,2-méthoxyéthane, du carbonate d'éthylméthyle, du carbonate de méthylpropyle, du carbonate d'éthylpropyle, du carbonate de diéthyle, du carbonate de dipropyle, du carbonate de propylène, du carbonate d'éthylène, du carbonate de butylène, de l'acétonitrile, du sulfoxyde de diméthyle, du diméthylformamide, du diméthylacétamide, de la γ-valérolactone, de la γ-butyrolactone, de la N-méthylpyrrolidinone, et de mélanges de ceux-ci.

16. Pile selon la revendication 1 ou la revendication 2, dans laquelle la partie saillante (70) est espacée de la paroi latérale du boîtier (14).

17. Procédé de fabrication d'une pile électrochimique (10), comprenant les étapes qui consistent à :
a) former un boîtier (12) comprenant une ouverture proximale (18), une ouverture distale (20), et une paroi latérale (14) entourant un volume renfermé (16) ;
b) enfermer hermétiquement une broche-borne (28) à l'intérieur d'un joint d'étanchéité verre-métal (22) disposé dans l'ouverture proximale (18) et à l'intérieur du volume renfermé (16) du boîtier (12) ;
c) insérer un isolateur (44) à l'intérieur du volume renfermé (16) le long d'une première partie (45) de la paroi latérale du boîtier (14) ;
d) former une première électrode (54) en plaçant une première matière active d'électrode à l'intérieur de l'isolateur (44) et en contact électrique avec la broche-borne (28) ;
e) placer un disque séparateur (64) comprenant un matériau ayant un degré de porosité suffisant pour permettre à un électrolyte de circuler entre et jusqu'à une première face principale et une deuxième face principale opposées, séparées l'une de l'autre par une épaisseur de disque formant un bord de disque contigu avec une deuxième partie (65) de la paroi latérale du boîtier (14) et en contact avec la première électrode (54), la première face du disque étant en contact avec la première électrode (54) contenue dans l'isolateur (44);
f) mettre en contact le disque séparateur (64) et la première électrode (54) avec un électrolyte ;
g) former une deuxième, contre-électrode (66) en plaçant une deuxième matière active d'électrode en contact avec le disque séparateur (64) et avec une troisième partie (76) de la paroi latérale du boîtier (14) ; et
h) fermer hermétiquement l'extrémité distale (20) du boîtier (12) avec un couvercle (68), le couvercle (68) comprenant une face interne sensiblement plane (72) en contact avec la deuxième matière active d'électrode et portant une partie saillante (70) qui s'étend au-delà de la face interne plane du couvercle (72) dans la deuxième matière active d'électrode ;
dans lequel soit la première électrode (54) est une cathode et la deuxième, contre-électrode (66) est une anode, soit la première électrode (54) est une anode et la deuxième, contre-électrode (66) est une cathode.

18. Procédé selon la revendication 17, dans lequel la première électrode (54) est une cathode et la deuxième, contre-électrode (66) est une anode.

19. Procédé selon la revendication 17 ou la revendication 18, consistant en outre à réunir l'isolateur (44) au joint d'étanchéité verre-métal (22) avec un matériau élastomère (42).

20. Procédé selon la revendication 17 ou la revendication 18, dans lequel la matière active cathodique est fournie sous la forme d'une poudre et la cathode (54) est formée par compression de la poudre.

21. Procédé selon la revendication 17 ou la revendication 18, consistant en outre à placer l'anode (66), le disque séparateur (64) et la cathode (54) de telle sorte qu'ils soient comprimés avec le couvercle (68).

22. Procédé selon la revendication 17 ou la revendication 18, consistant à disposer la partie saillante (70) de telle sorte qu'elle soit espacée de la paroi latérale du boîtier (14).

23. Dispositif médical implantable (30) alimenté par une pile électrochimique (10) selon la revendication 1, la paroi latérale du boîtier (14) délimitant l'ouverture proximale (18) du boîtier (12) de la pile électrochimique (10) raccordée au boîtier du dispositif médical (32).

24. Pile électrochimique selon la revendication 1 ou dispositif médical selon la revendication 23, ayant les caractéristiques énoncées dans l'une quelconque ou dans toute combinaison des revendications 2 à 16.
